# EUROPEAN PATENT APPLICATION

(11) **EP 3 574 789 A1**
(43) Date of publication of application: **04.12.2019**
(21) Application number: 18745277.6
(22) Date of filing: 24.01.2018
(51) Int. Cl.: A43B 13/12

(54) **SOLE STRUCTURE**

(30) Priority: 25.01.2017 CN 201710061334
(71) Applicant: Qingyuan Global Technology Services Ltd., Qingyuan City, Guangdong 511800 (CN)
(72) Inventor: LUH, Yih-Ping, Taipei 104 (TW)
(74) Representative: dompatent von Kreisler Selting Werner - Partnerschaft von Patent- und Rechtsanwälten mbB
(86) International application number: PCT/CN2018/074007
(87) International publication number: WO 2018/137661

(57) **Abstract**

The present invention discloses a sole structure to be combined with a shoe upper, comprising an outsole, a carbon fiber sheet and a thermoplastic elastic sheet. The outsole has a side wall to be adhered to the shoe upper. The carbon fiber sheet is disposed on the outsole. The thermoplastic elastic sheet adheres to the carbon fiber sheet to form an upper-layer structure, wherein the upper-layer structure is adhered to the shoe upper.

## Description

### BACKGROUND OF THE INVENTION

### 1. Field of the invention

The present invention discloses a sole structure, particularly a sole structure which applies to textile upper.

### 2. Description of the prior art

Designs for shoes that people wear not only need to focus on having a beautiful appearance but also on improving wearing comfort and even distribution of the weight on the foot. In the aspect of even distribution of the weight on the foot, the conventional way is mainly by arranging a sheet of soft material or an air buffer layer between the shoe sole and the outsole to have a buffer effect to reduce the impact to the foot. In addition, by using different sole materials, support or other functional improvements may be achieved.

However, due to limitations in shoe design and manufacturing processes, the aforementioned functions provided by shoe soles are limited by the sole structure and may not be fully realized. For example, the support and buffer effect provided by the sole can be limited by the corresponding structural relationship between the sole and the shoe upper.

### SUMMARY OF THE INVENTION

The present invention discloses a sole structure which improves the overall elasticity of shoes and provides a buffer effect.

The present invention discloses a sole structure to be combined with a shoe upper, comprising an outsole, a carbon fiber sheet and a thermoplastic elastic sheet. The outsole has a side wall to be adhered to the shoe upper. The carbon fiber sheet is disposed on the outsole. The thermoplastic elastic sheet adheres to the carbon fiber sheet to form an upper-layer structure, wherein the upper-layer structure is adhered to the shoe upper.

In an embodiment, the shoe upper is a textile upper.

In an embodiment, the outsole consists, sequentially from top to bottom, of a top rubber sheet, a midsole fabric and a bottom rubber sheet, and the side wall is disposed on the sides of the bottom rubber sheet.

In an embodiment, the midsole fabric has a grid structure, and the upper rubber sheet, the midsole fabric and the bottom rubber sheet are combined by hot-pressing to allow the top rubber sheet to extend through the grid structure to be connected to the bottom rubber sheet.

In an embodiment, the grid structure has a plurality of grids, and the size of each grid is between 0.2 mm and 0.4 mm.

In an embodiment, the midsole fabric comprises a first midsole cloth and a second midsole cloth. A first gap exists between the first midsole cloth and the second midsole cloth. The first midsole cloth corresponds to the front sole portion of a foot. The second midsole cloth corresponds to the heel portion of the foot. The first gap corresponds to the arch portion of the foot.

In an embodiment, the bottom rubber sheet comprises a first bottom rubber sheet, a second bottom rubber sheet and a third bottom rubber sheet. A second gap exists between the first bottom rubber sheet and the second bottom rubber sheet. A third gap exists between the second bottom rubber sheet and the third bottom rubber sheet. The first bottom rubber sheet corresponds to the front portion of the first midsole cloth. The second bottom rubber sheet corresponds to the rear portion of the first midsole cloth. The third bottom rubber sheet corresponds to the second midsole cloth. The third gap corresponds to the first gap.

In an embodiment, the second gap is smaller than the third gap, and the second gap roughly corresponds to the middle portion of the first midsole cloth.

In an embodiment, the fist bottom rubber sheet has a first side wall. The second bottom rubber sheet has a third side wall. The third bottom rubber sheet has a third side wall. The firs side wall, second side wall and third side wall are adhered to the shoe upper, respectively.

In an embodiment, the first side wall is formed by extending upward from two sides of the first rubber bottom sheet with the extensions connecting at a location corresponding to the tip of the toe portion of the foot. The second side wall is formed by extending upward from two sides of the second rubber sheet. The third side wall is formed by extending upward from two sides of the third rubber sheet with the extensions connecting a location corresponding to the heel portion of the foot.

In an embodiment, a material of the midsole fabric includes fiber-reinforced plastics.

In an embodiment, a material of the thermoplastic-elastic sheet includes thermoplastic polyester elastomer.

In an embodiment, the side wall is adhered to the outer surface of the shoe upper, and the upper-layer structure is adhered to the inner surface of the shoe upper.

In an embodiment, the side wall is adhered to the outer surface of the shoe upper, and the carbon fiber sheet is adhered to the bottom of the shoe upper located between the outsole and the upper-layered structure.

In an embodiment, the carbon fiber sheet is adhered to the outsole by an adhesive.

In an embodiment, the carbon fiber sheet is not adhered to the outsole.

### BRIEF DESCRIPTION OF THE APPENDED DRAWINGS

Figure 1 is a schematic view of a decomposition of the sole structure of a first preferred embodiment of the present invention.
Figure 2 is a schematic view of sports shoes having the sole structure shown in figure 1.
Figure 3 is a cross section view of the upper-layer structure adhered to the shoe upper of the first preferred embodiment of the present invention.
Figure 4 is a cross section view of the upper-layer structure adhered to the shoe upper of the second preferred embodiment of the present invention.
Figure 5 is a cross section view of the upper-layer structure adhered to the shoe upper of the third preferred embodiment of the present invention.
Figure 6 is a schematic view of a decomposition of the sole structure of the second preferred embodiment of the present invention.
Figure 7 is a schematic view of a decomposition of the sole structure of the third preferred embodiment of the present invention.
Figure 8 is a schematic view of a decomposition of the sole structure of the fourth preferred embodiment of the present invention.

### DETAILED DESCRIPTION OF THE INVENTION

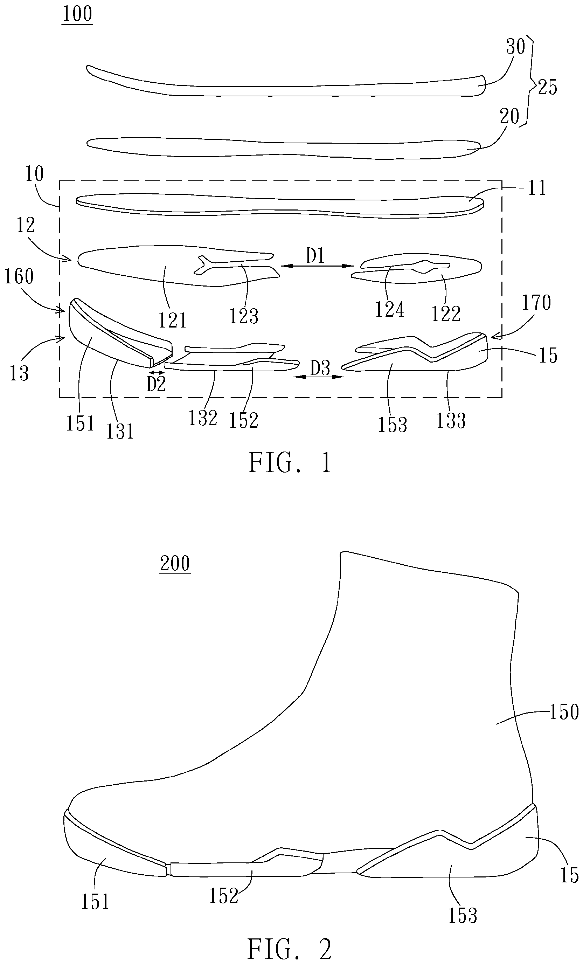

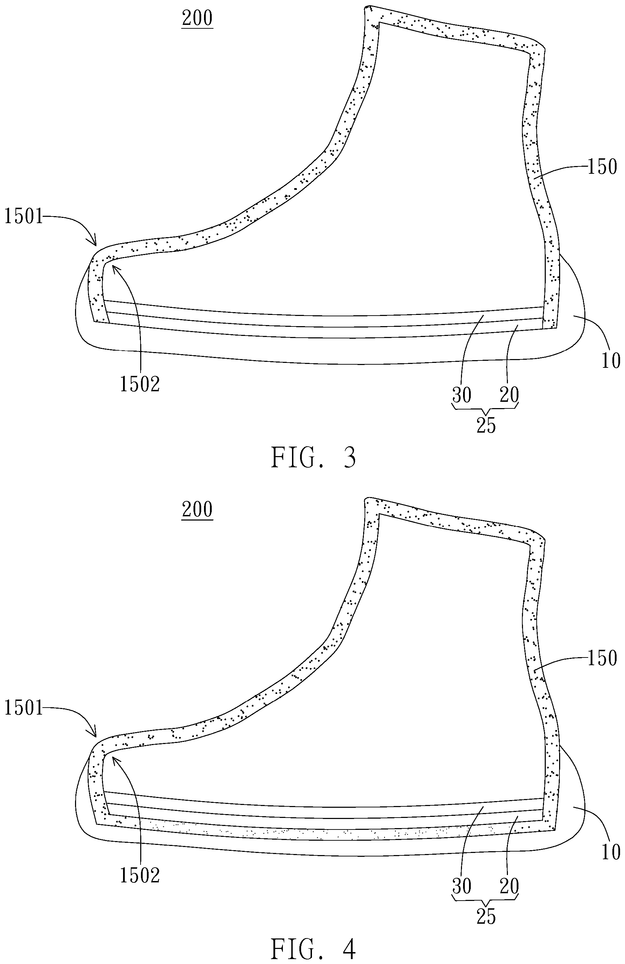

Refer to figure 1, figure 2 and figure 3. Figure 1 is a schematic view of a decomposition of the sole structure of the first preferred embodiment of the present invention, and Figure 2 is a schematic view of sports shoes with the sole structure shown in Figure 1, and the Figure 3 is a cross section view of the upper-layer structure adhered to the shoe upper of the first embodiment of the present invention.

As shown in Figure 1, the disclosed sole structure 100 comprises an outsole 10, a carbon fiber sheet 20 and a thermoplastic elastic sheet 30, wherein a material of the thermoplastic elastic sheet 30 is, preferably and in a non-limiting manner, thermoplastic polyester elastomer (TPEE). The outsole 10 preferably consists, sequentially from top to bottom, a top rubber sheet 11, a midsole fabric 12 and a bottom rubber sheer 13, wherein a material of the midsole fabric 12 is, preferably and in a non-limiting manner, a fiberglass reinforced plastics (FRP). A side wall 15 is arranged on the sides of the bottom rubber sheet 13 and is adhered to a shoe upper 150 to form a sports shoe 200 shown in figure 2. Wherein the shoe upper 150 is preferably a soft upper and is more preferably a textile upper such as a knitted upper. Wherein the sports shoe 200 is, preferably and in a non-limiting manner, a basketball shoe.

In the embodiment, the midsole fabric 12 is preferably a cloth of grid structure having a plurality of grids formed by a nonrestrictive-knitting method. Wherein the nonrestrictive-knitting method includes warp knitting, weft knitting, circular knitting and shuttle knitting and so on. The size of each of the grids is, preferably and in a non-limiting manner, between 0.2 mm and 0.4 mm. Furthermore, the top rubber sheet 11, the midsole fabric 12 and the bottom rubber sheet 13 are combined by hot-pressing to allow the top rubber sheet 11 to extend through the grid structure of the midsole fabric 12 to be connected to the bottom rubber sheet 13 to form the outsole 10. Therefore, unlike ordinary thin rubber, the outsole 10 does not have the problem of easily breaking when pulled, so the outsole is comparable with a very thick rubber sole in terms of strength.

The carbon fiber sheet 20 is disposed on the outsole 10, and the thermoplastic elastic sheet 30 is adhered to the carbon fiber sheet 20 to form the upper-layer structure 25. In this embodiment, the upper-layer structure 25 is not adhered to the outsole 10; namely the carbon fiber sheet 20 is not adhered to the outsole 10. More specifically, the carbon fiber sheet 20 is arranged to cover the top rubber sheet 11, but the carbon fiber sheet 20 is not fixed or adhered to the top rubber sheet 11.

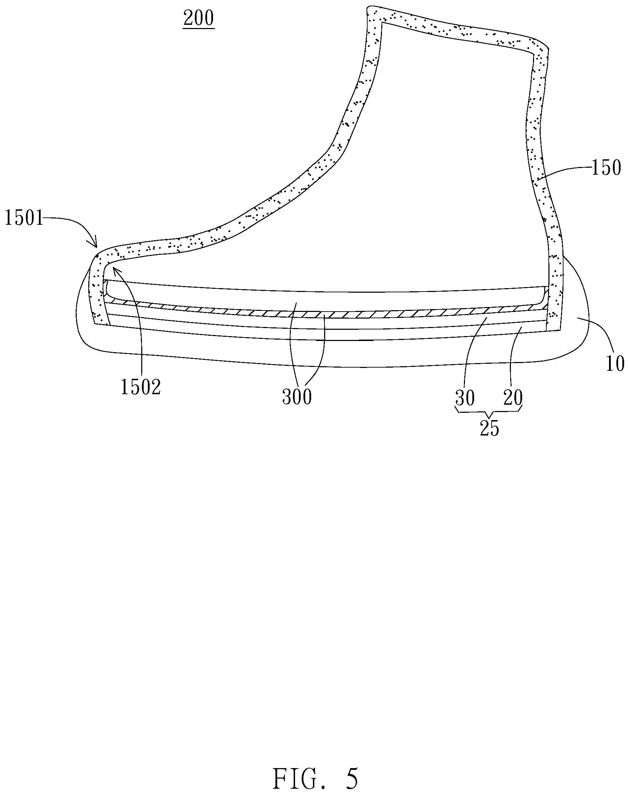

In an embodiment, as shown in Figure 3, the side wall 15 is adhered to the inner surface 1502 of the shoe upper 150. In other embodiment, as shown in Figure 4, the side wall 15 is adhered to the outer surface 1501 of the shoe upper 150. The carbon fiber sheet 20 of the upper-layer structure 25 is adhered to the bottom of the shoe upper 150 which extends between the outsole 10 and the upper-layer structure 25. In other embodiment, as shown in Figure 5, the upper-layer structure 25 is fixed by at least one adhesive liner cloth 300. For example, a portion of the adhesive liner cloth 300 can be adhered to the inner surface 1502 located at the side of the shoe upper 150, and then another portion of the adhesive liner cloth 300 can be adhered to the thermoplastic elastic sheet 30 of the upper-layer structure.

Refer to the sole structure 100 of the embodiment. The outsole 10 is not adhered to the upper-layer structure 25, and the outsole 10 and the upper-layer structure 25 are adhered to different portions (for example the outer surface of the shoe upper and the bottom of the shoe upper) of the shoe upper 150, respectively. If a user suddenly stops while wearing the sports shoes 200 and making a lateral movement or playing basketball, a stress of anti-slip and anti-deformation is applied to the outsole 10 to prevent a shifting phenomenon from happening to the upper-layer structure. When a user wears the sports shoes 200 and makes a movement of bending or jumping, the upper-layer structure 25 and the outsole 10 do not bend simultaneously because the outsole 10 is not adhered to the upper-layered structure 25. At this time, a stress of jumping and bending occurs to the carbon fiber sheet 20, and a buffer stress occurs to the thermoplastic-elastic sheet 30 to improve the overall elasticity of the sports shoes 200 and to provide a buffer effect.

In a preferred embodiment, the midsole fabric 12 is composed of the first midsole cloth 121 and the second midsole cloth 122 which are apart from each other, wherein a first gap D1 exists between the first midsole cloth 121 and the second midsole cloth 122. The arranged location of first midsole cloth 121 corresponds to the front sole portion of a foot, the arranged location of the second midsole cloth 122 corresponds to the heel portion of the foot. The first gap D1 corresponds to the arch portion of the foot. In an embodiment, the first midsole cloth 121 has at least one slit 123 extending from the arch portion to the front sole portion, and the second midsole cloth has at least one slit 124 extending from the arch portion to the heel portion to improve the extensibility of the first midsole 121 and the second midsole 122.

In a preferred embodiment, the bottom rubber sheet 13 is composed of a first bottom rubber sheet 131, a second bottom rubber sheet 132 and a third bottom rubber sheet 133 which are apart from one another, wherein a second gap D2 exists between the first bottom rubber sheet 131 and the second bottom rubber sheet 132, and a third gap D3 exists between the second bottom rubber sheet 132 and the third bottom rubber sheet 133. The arranged location of the first bottom rubber sheet 131 corresponds to the front portion of the first midsole cloth 121; the arranged location of the second bottom rubber sheet 132 corresponds to the rear portion of the first midsole cloth 121; the third bottom rubber sheet 133 corresponds to the second midsole cloth 122; the third gap D3 corresponds to the first gap D1. Besides, the second gap D2 is preferably less than the third gap D3, and the second gap D2 roughly corresponds to the middle portion of the first midsole cloth 121.

In a preferred embodiment, the first bottom rubber sheet 131 has a first side wall 151, the second bottom rubber sheet 132 has a second side wall 152, and the third bottom rubber sheet 133 has a third side wall 153. The first side wall 151, the second side wall 152 and the third side wall 153 are adhered to the shoe upper 150 to form the sports shoe 200 shown in Figure 2. Wherein the first side wall 151 is preferably formed by extending upward from two sides of the first bottom rubber sheet 131 with the extensions connecting at a location corresponding to the tip of the toe portion 160 of the foot; the second side wall 152 is preferably formed by extending upward from two sides of the second bottom rubber sheet 132; the third side wall 153 is preferably formed by extending upward from two sides of the third bottom rubber sheet 133 with the extensions connecting at a location corresponding to the heel portion 170 of the foot.

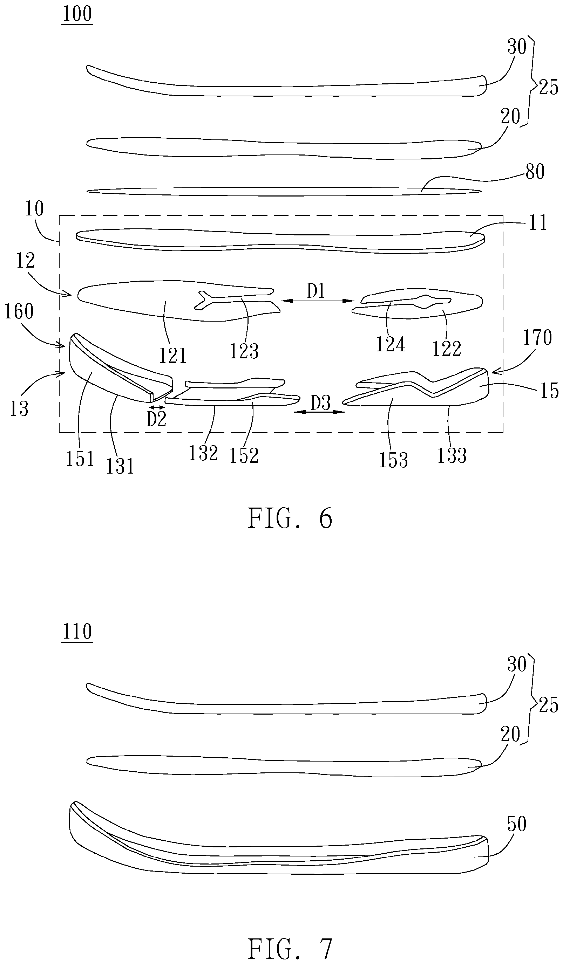

Refer to Figure 6. Figure 6 is a schematic view of a decomposition of the sole structure of the second preferred embodiment of the present invention. It is similar to the first preferred embodiment, with the only difference being that the outsole 10 of the embodiment is adhered to the upper-layer structure. Hence, the same label represents the same element and will not be described repeatedly herein.

In the embodiment, the upper rubber sheet 11 of the outsole 10 is adhered to the carbon fiber sheet 20 of the upper-layer structure 25 by an adhesive 80 to fix the upper-layer structure on the outsole 10. In other embodiment, the way to adhere the outsole 10 to the upper-layer structure 25 includes but not limited to squeeze adhesion or injection adhesion and so on.

As shown in Figure 7, Figure 7 is a schematic view of a decomposition of the sole structure of the third preferred embodiment of the present invention. This embodiment is similar to the first preferred embodiment, with the only difference being that the outsole 50 of the sole structure 110 of this embodiment is different from the outsole 10 of the first embodiment. Therefore, the same label represents the same element and will not be described repeatedly herein. In the same way, the outsole 50 of this embodiment has a side wall 55, and the outsole 50 is not adhered to the upper-layer structure, wherein the material of the outsole 50 includes but is not limited to rubber.

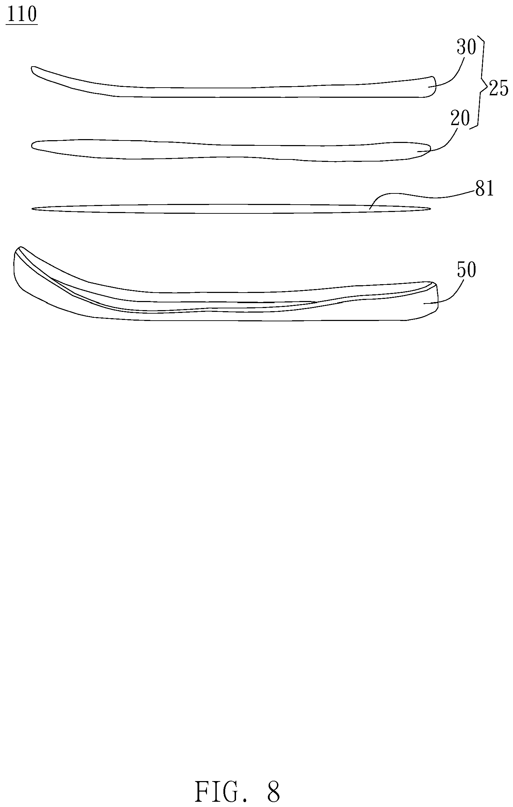

As shown in Figure 8, Figure 8 is a schematic view of a decomposition of the sole structure to the fourth preferred embodiment of the present invention. This embodiment is similar to the third preferred embodiment, with the only difference being that the outsole 50 of the sole structure 110 of this embodiment is adhered to the carbon fiber sheet 20 of the upper-layer structure 25 by an adhesive 81 to fix the upper-layer structure 25 to the outsole 50. In other embodiment, the way to adhere the outsole 50 to the upper-layer structure 25 includes but is not limited to squeeze adhesion or injection adhesion and so on.

The present invention has been described by the embodiments mentioned above. However, the aforementioned embodiments are only examples. It is necessary to point out that the disclosure embodiments are not intended to limit the present invention. Conversely, any modifications and equivalent setups which are included in the scope and spirt of the present invention are under the scope of the present invention.

## Claims

1. A sole structure for combining with a shoe upper, comprising:
an outsole having a side wall adhered to the shoe upper;
a carbon fiber sheet arranged on the outsole; and
a thermoplastic elastic sheet adhered to the carbon fiber sheet to form an upper-layered structure, wherein the upper-layered structure is adhered to the shoe upper.

2. The sole structure of claim1, wherein the shoe upper is a textile upper.

3. The sole structure of claim 1, wherein the outsole consists, sequentially from top to bottom, of a top rubber sheet, a midsole fabric and a bottom rubber sheet, and the side wall is arranged on sides of the bottom rubber sheet.

4. The sole structure of claim 3, wherein the midsole fabric has a grid structure, and the upper rubber sheet, the midsole fabric, and the bottom rubber sheet are combined by hot-pressing to allow the top rubber sheet to extend through the grid structure to be connected to the bottom rubber sheet.

5. The sole structure of claim 4, wherein the grid structure having a plurality of grids, and a size of each grid is between 0.2 mm and 0.4 mm.

6. The sole structure of claim 3, wherein the midsole fabric comprises a first midsole cloth corresponding to a front sole portion of a foot and a second midsole cloth corresponding to a heel portion of the foot, and a first gap exists between the first midsole cloth and the second midsole cloth and corresponds to an arch portion of the foot.

7. The sole structure of claim 6, wherein the bottom rubber sheet comprises a first bottom rubber sheet corresponding to a front portion of the first midsole cloth, a second bottom rubber sheet corresponding to a rear portion of the first midsole cloth and a third bottom rubber sheet corresponding to the second midsole cloth, a second gap exists between the first bottom rubber sheet and the second bottom rubber sheet, and a third gap exists between the second bottom rubber sheet and the third bottom rubber sheet and corresponds to the first gap.

8. The sole structure of claim 7, wherein the second gap is less than the third gap, and the second gap substantially corresponds to a middle portion of the first midsole cloth.

9. The sole structure of claim 7, wherein the first bottom rubber sheet has a first side wall, the second bottom rubber sheet has a second side wall, the third bottom rubber sheet has a third side wall, and the first side wall, the second side wall and the third side wall are adhered to the shoe upper, respectively.

10. The sole structure of claim 9, wherein the first side wall is formed by extending upward from two sides of the first bottom rubber sheet and connecting at a location corresponding to a tiptoe portion of the foot, the second side wall is formed by extending upward from two sides of the second bottom rubber sheet, and the third side wall is formed by extending upward from two sides of the third bottom rubber sheet and connecting at a location corresponding to the heel portion of the foot.

11. The sole structure of claim 1, wherein a material of the midsole fabric comprises fiber-reinforced plastics.

12. The sole structure of claim 1, wherein a material of the thermoplastic-elastic sheet comprises thermoplastic polyester elastomer.

13. The sole structure of claim 1, wherein the side wall is adhered to an outer surface of the shoe upper, and the upper-layered structure is adhered to an inner surface of the shoe upper.

14. The sole structure of claim 1, wherein the side wall is adhered to an outer surface of the shoe upper, and the carbon fiber sheet is adhered to a bottom of the shoe upper located between the outsole and the upper-layered structure.

15. The sole structure of claim 1, wherein the side wall is adhered to an outer surface of the shoe upper, and the upper-layered structure is adhered to the shoe upper indirectly via at least one adhesive liner cloth, wherein a portion of the at least one adhesive liner cloth is adhered to an inner surface of the shoe upper, and another other portion of the at least one adhesive liner cloth is adhered to the thermoplastic-elastic sheet of the upper-layered structure.

16. The sole structure of claim 1, wherein the carbon fiber sheet is adhered to the outsole by an adhesive.

17. The sole structure of claim 1, wherein the carbon fiber sheet is not adhered to the outsole.
